(19) **Europäisches Patentamt**

**European Patent Office**

**Office européen des brevets**

(11) **EP 0 836 074 B1**

(12) **EUROPEAN PATENT SPECIFICATION**

(45) Date of publication and mention
of the grant of the patent:
**31.03.2004 Bulletin 2004/14**

(51) Int Cl.⁷: **G01C 21/20**

(21) Application number: **97307918.9**

(22) Date of filing: **07.10.1997**

(54) **Route guidance system and method for use in vehicle navigation**

Routenführungssystem und -verfahren zur Verwendung bei Fahrzeugnavigation

Système et méthode de guidage routier à utiliser dans la navigation véhiculaire

(84) Designated Contracting States:
**DE FR GB**

(30) Priority: **11.10.1996 US 731371**

(43) Date of publication of application:
**15.04.1998 Bulletin 1998/16**

(73) Proprietor: **Visteon Technologies, LLC
Dearborn, MI 48126 (US)**

(72) Inventors:
• **Tamia, Haruhisa
Higashimatsuyama-shi, Saitama 355 (JP)**

• **Pai, Satish
Newark, CA 94560 (US)**

(74) Representative: **W.P. THOMPSON & CO.
55 Drury Lane
London WC2B 5SQ (GB)**

(56) References cited:
**EP-A- 0 375 817        US-A- 5 184 123
US-A- 5 410 486**

**Description**

The present invention relates to a method and apparatus for use in a vehicle navigation system in communicating a calculated route to a driver. A particular arrangement to be described below by way of example in illustration of the present invention is concerned with the timing of warning prompts which alert a driver to upcoming manoeuvres.

Vehicle navigation systems employ a variety of methods for communicating a route to a driver. One method employs warning chimes to alert the driver to an upcoming manoeuvre. Another employs a series of voice prompts. The timing of these chimes or voice prompts are crucial to effective route guidance. If a prompt is delayed, the driver may not be able to execute the manoeuvre in a safe and orderly manner. If a prompt is issued too early and a significant amount of time elapses before the vehicle arrives at the manoeuvre location, the driver may not be properly alerted.

Currently available vehicle navigation systems which have warning chimes or voice guidance typically employ a fixed distance at which the driver is warned of an upcoming manoeuvre. That is, once the vehicle is determined to be within a particular distance of a geographical location at which the manoeuvre is to be executed, the system issues the warning chime or the voice guidance prompt. Unfortunately, this method does not account for the often widely varying characteristics of the environment in which the vehicle is operating. For example, if the fixed warning distance is set to provide adequate notice to the driver in a freeway environment where the speed limit is 65 miles per hour (105 km/h), it is likely that it will be too long for a residential area where the speed limit is typically 25 miles per hour (40 km/h).

Moreover, a fixed warning distance may cause confusion by encompassing more than one junction at which similar manoeuvres may be executed. This will almost certainly be the case where the fixed warning distance is set relative to a freeway environment. Because such a warning distance would be relatively long, it would be likely to encompass more than one intersection in a different environment where the average vehicle speed is considerably less such as, for example, in a residential environment. Such confusion is unacceptable if a vehicle navigation system is to guide a driver adequately along a calculated route.

A more flexible approach is therefore needed for communicating warnings of impending manoeuvres to the user of a vehicle navigation system.

In the specification of U.S. patent number 5,184,123, which was published on February 2 1993 and in the specification of U.S. patent number 5,410,486 which was published on April 25 1995, there were described, respectively, a method of and arrangement for representing point-referenced travel guiding information, especially in power vehicles on a display of an electronic guiding and orienting device, a desired travel route is input, and a travel guiding information is represented at a distance from a reference point determined in accordance with the vehicle speed, and a vehicle navigation system for orally issuing route guidance, capable of changing a point at which the route guidance was issued depending on the moving situation of a vehicle. The moving situation was at least one of a number of lanes in a road being travelled, a width of a crossroad intersecting the road being travelled and the speed of the vehicle. The moving situation was detected by a moving situation detector section and based on the detected moving situation, the route guidance issuing point was changed to the optimum point for the moving situation at that time by a guidance issuing point changer of a route guide controller.

A vehicle navigation system to be described below, by way of example in illustration of the invention, communicates warnings of upcoming manoeuvres in a manner which takes into account the conditions under which the vehicle is operating, thereby providing a more flexible approach. Once a route has been calculated, each manoeuvre in the route is communicated to the driver at a warning distance which may be varied according to a variety of factors.

An embodiment of the present invention can deal with situations in which road junctions having similar geometries are closely spaced and are likely to cause confusion as to which junction a particular warning prompt refers. Once the system determines a warning distance for a particular upcoming manoeuvre, it then determines whether there are any junctions within the warning distance in advance of the manoeuvre junction which present a similar geometry, i.e., any junction which could be mistaken for the manoeuvre junction. If such a junction is found, the warning distance is adjusted to be less than or equal to the distance between the similar junction and manoeuvre junction. In a specific embodiment the warning distance is set such that the warning is issued immediately after the vehicle passes the similar junction, thereby avoiding any confusion.

Also where the particular manoeuvre corresponds to a first junction having a first characteristic, and in which a second junction having the first characteristic is within the warning distance, the warning distance is adjusted to an adjusted warning distance. In a more specific embodiment, the distance between the first and second junctions is defined as the first distance and the adjusted warning distance is set to the first distance where the first distance is greater than or equal to the minimum limit. Where the first distance is less than the minimum limit, the adjusted warning distance is set to the minimum limit.

According to the present invention there is provided a method for providing route guidance to a user of a vehicle navigation system, including the steps of generating a route which corresponds to a plurality of manoeuvres, determining a warning distance corresponding to a particular manoeuvre associated with a first junction, the first junction having a first geometry determining whether a second junction having a similar geometry to the first geometry precedes the first junction within the warning distance, where the second junction does not precede the first junction, providing a manoeuvre instruction corresponding to the particular manoeuvre at the warning distance from the first junction, and where the second junction precedes the first junction, providing the manoeuvre instruction at an adjusted warning distance from the first junction.

Preferably the system calculates a warning distance based in part on the current speed of the vehicle. As a result, the warning distance more closely resembles the actual distance required for the driver to react to the manoeuvre instruction in a timely and safe manner.

Alternatively the system determines the link class of the road upon which the vehicle is currently travelling and selects a warning distance associated with the determined link class. Because the link class of a road corresponds roughly to the speed at which one travels on the road, this method has an effect on the warning distance which is similar to that described above.

The following description and drawings disclose, by means of examples, the invention which is characterised in the claims, whose terms determine the extent of the protection conferred hereby.

In the drawings:-

Fig. 1 is a block diagram of a vehicle navigation system which is suitable for use with the present invention,
Fig. 2 is a graph of warning distance vs. vehicle speed,
Fig. 3 is a diagram for use in illustrating a particular method of operation of a system,
Fig. 4 is a diagram for use in illustrating another method of operation of a system,
Fig. 5 is a diagram for use in illustrating yet another method of operation of a system, and
Fig. 6 is a flowchart.

Arrangements to be described below, in illustration of the invention are suitable for use with apparatus described in commonly assigned United States Patents No. 5,345,382 to Kao for CALIBRATION METHOD FOR A RELATIVE HEADING SENSOR, No. 5,359,529 to Snider for ROUTE GUIDANCE ON/OFF-ROUTE STATE FILTER, No. 5,374,933 to Kao for POSITION CORRECTION METHOD FOR VEHICLE NAVIGATION SYSTEM, and No. 5,515,283 to Desai et al. for METHOD FOR IDENTIFYING HIGHWAY ACCESS RAMPS FOR ROUTE CALCULATION IN A VEHICLE NAVIGATION SYSTEM.

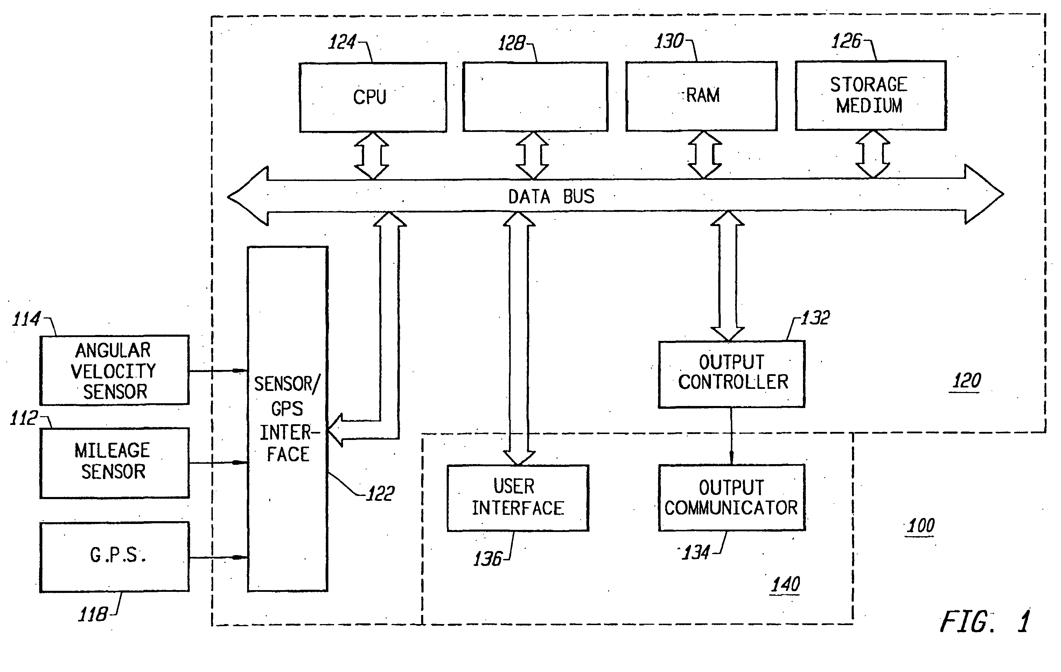

Fig. 1 is a block diagram of a specific embodiment of a vehicle navigation system 100 for use with an arrangement illustrative of the present invention. Sensors 112 and 114 and GPS receiver 118 are coupled to computing means 120 through a sensor/GPS interface 122. In typical embodiments, mileage sensor 112 is an odometer, and angular velocity sensor 114 includes a gyroscope, or a differential odometer coupled to the wheels of the vehicle. A global positioning system (GPS) data receiver 118 is provided for receiving signals from, for example, a satellite-based navigation system. Data from a sensor/GPS interface 122 is transmitted to a CPU 124, which performs calibration, signal processing, dead-reckoning, vehicle positioning, and route guidance functions. A database containing map information may be stored in a database medium 126, with software directing the operation of computing means 120 stored.in a main memory 128 for execution by the CPU 124. The memory 128 may include a read-only memory (ROM), or a reprogrammable non-volatile memory, such as a flash memory or an SRAM. A system RAM 130 permits the reading and the writing of the information necessary to execute such software programs. A database medium 126 may be a non-volatile memory, a hard disk drive, a CD-ROM, or an integrated circuit in which digitized map information has been stored. An output controller 132, which may include a graphics controller, receives data processed by the CPU 124 and transmits the data to display console 140 which includes an output communicator 134, usually having a display screen with associated audio electronics and audio speakers. The driver may input data, such as a desired destination, through a user interface 136, typically being a keyboard.

The map database stored in the database medium 126 preferably includes positional data such as, for example, latitude and longitude coordinates, to describe road intersections or nodes, road segments, landmarks and points of interest, and other geographical information. The database may further include data representing characteristics of roads or places on the map, such as road and place names, road features such as dividers, one-way restrictions, surface, speed limit, shape, elevation, and other properties. In specific embodiments illustrative of the invention, the map database includes cost values associated with individual nodes and road segments. These cost values correspond to the estimates of the time intervals for traversing the respective node or segment. Node cost values take into consideration such information as, for example, whether a vehicle would encounter oncoming traffic, thus delaying a left turn manoeuvre. Segment costs reflect road segment characteristics such as speed limit and segment length, both of which affect the travel time along the segment. Also associated with each road in the map database is a link class which relates to the category or type of the road. For example, the highest level category of the hierarchy is the link class FREEWAY. The lowest level includes the link classes FRONTAGE and MISC which include, for example, frontage roads and alleys.

A vehicle navigation system for use with arrangements illustrative of the present invention is operable to generate a route from a source location to a destination according to a variety of different methods. Some examples of such methods are described in the U.S.. patents which have been referred to above. In addition, further methods for route generation which may be employed in conjunction with the present invention are described in a commonly assigned, copending U.S. Patent Application for ROUTE GENERATION IN A VEHICLE NAVIGATION SYSTEM.

Once a route has been generated according to any of a variety of methods, the system begins to communicate manoeuvre instructions to the driver. Each manoeuvre instruction is communicated at a variable warning distance in advance of the location of the upcoming manoeuvre. The warning distance may be determined according to different embodiments of the invention. In one method, the warning distance for a particular manoeuvre instruction is set according to the link class associated with the road on which the vehicle is travelling as it approaches the corresponding manoeuvre. For example, Table 1 shows warning distances for different link classes according to a specific embodiment illustrative of the invention. (Conversion factors: 1 ft. = 0.3048 m; 1 mile = 1.609 km).

Table 1.

| Warning distance table | |
| --- | --- |
| Road Segment Link Class | Warning distance (ft.) |
| Freeway | 2112 |
| Expressway | 1214 |
| Artery | 1003 |
| Street | 792 |
| Frontage | 528 |
| Ramp | 1214 |
| Connector | 528 |
| Miscellaneous | 528 |
| Access | 528 |

In another method, the warning distance for a particular manoeuvre instruction is determined in part with reference to the current speed of the vehicle. In a specific embodiment, the warning distance is given by:

$$d_w = d_{max}; v_a > v_{max} \tag{1}$$

$$d_w = d_{min} + [(d_{max}-d_{min}) \cdot (v_a-v_{min})]/(v_{max}-v_{min}); v_{max} \geq v_a \geq v_{min} \tag{2}$$

$$d_w = d_{min}; v_a < v_{min} \tag{3}$$

where

$d_w$ is the warning distance;
$d_{min}$ is the minimum limit;
$d_{max}$ is the maximum limit;
$v_a$ is the current vehicle speed;
$v_{min}$ is a minimum speed below which the warning distance is the minimum limit; and
$v_{max}$ is a maximum speed above which the warning distance is the maximum limit.

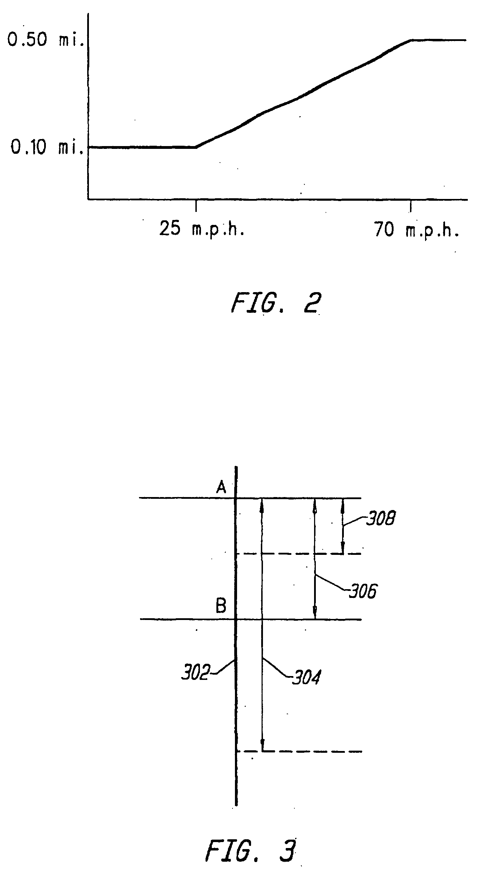

In various other specific embodiments $d_{min}$ is 528 feet, $d_{max}$ is 2640 feet, $v_{min}$ is 25 miles per hour, and $v_{max}$ is 70 miles per hour. Using these numbers, equations (1)-(3) may be plotted as shown in Fig. 2 with the horizontal axis representing vehicle speed and the vertical axis representing warning distance. As shown, below 25 mph the warning distance is constant at 0.1 miles (528 feet). Between 25 and 70 mph the warning distance varies according to equation (2). Finally, above 70 mph the warning distance is constant at 0.5 miles (2,640 feet).

Some embodiments also include a feature by means of which a chime is sounded after the manoeuvre instruction has been given at the warning distance to alert the driver that the manoeuvre must be executed almost immediately. The chime sounds may be set to sound at a location which is a fixed distance from the manoeuvre location, e.g., 300 feet. Alternatively, the chime distance may vary in a manner similar to the warning distance.

As mentioned above, even where the warning distance to a manoeuvre junction has been determined with reference to the environment in which the vehicle is operating, confusion may yet arise because one or more junctions with similar geometries lie within the warning distance. Such a situation is illustrated by the diagram of Fig. 3. As the driver proceeds along road 302 towards the next manoeuvre i.e., a right turn at location A, the system determines an original warning distance 304 according to one of the embodiments described above. If, however, the system determines that another junction exists within warning distance 304 at which the driver may also execute a right turn, i.e., location B, the warning distance is adjusted to the distance between location B and location A, i.e., distance 306. The system also sounds a chime at distance 308 where the vehicle is nearly on top of the manoeuvre. In yet another specific embodiment, if the adjusted warning distance would be less than a minimum warning distance, the warning distance is set to the minimum warning distance. In an even more specific embodiment, each link class has a minimum warning distance associated therewith.

Alternatively, where the system detects an intermediate junction such as location B, the originally determined warning distance is retained, but the substance of the warning is changed. Thus, for example, if the warning was originally to state "Turn right at next intersection", it is changed to state "Turn right at second intersection".

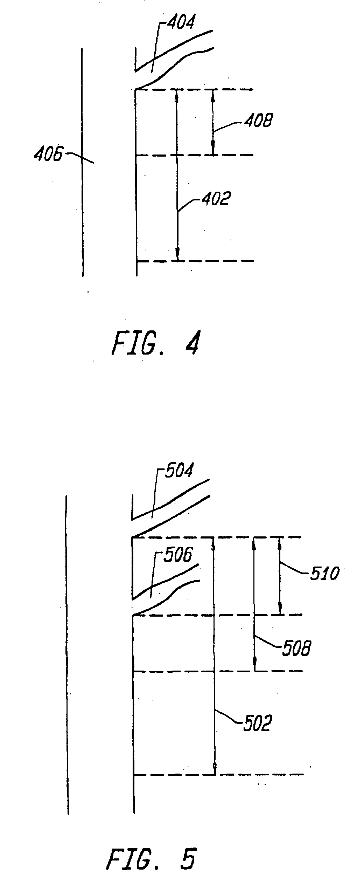

Another warning feature is provided in some embodiments to give the driver additional advance notice of an upcoming manoeuvre. In freeway environments, drivers must often traverse several lanes of traffic moving at high speeds in order to exit. Because the distance required to execute such a manoeuvre typically depends upon more than just the vehicle's speed, an additional voice prompt is provided which allows the driver to begin changing lanes well in advance of the desired exit. Fig. 4 shows a pre-warning distance 402 from an exit 404 on a freeway 406 at which the driver is provided with a voice prompt stating "Prepare to exit". Subsequently, at a warning distance 408 from exit 404, the driver receives the manoeuvre instruction "Next exit on the right". Pre-warning distance 402 may be set in a variety of ways. In one embodiment it includes some multiple of warning distance 408. In another embodiment, each link class has a fixed pre-warning distance associated therewith.

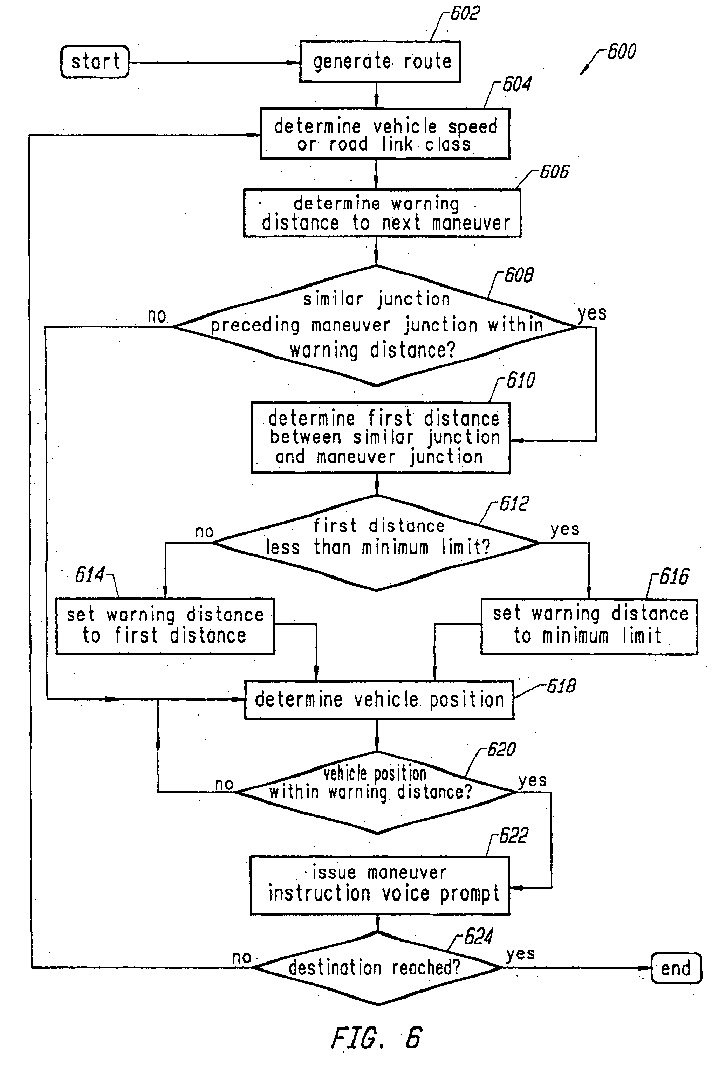

Fig. 5 shows a situation in which a pre-warning is issued at a distance 502 from a desired exit 504 and a similar exit 506 precedes exit 504. As with the example of Fig. 4, a warning distance 508 is determined. However, because the system detects the existence of exit 506, the warning distance is adjusted to a new warning distance 510 at which location a warning is issued stating "Next exit on the right".

Fig. 6 is a flowchart 600 which illustrates the operation of another particular embodiment illustrative of the present invention. Initially, a route between a source location and a destination is generated according to any of a variety of methods (step 602). The route includes a plurality of contiguous road segments and a plurality of manoeuvres to be executed by the driver. The manoeuvres are sequentially communicated to the driver via a display console and audio speakers. Between manoeuvres, the system determines at what point to communicate the next manoeuvre to the driver. To facilitate this determination, the system either determines the current speed of the vehicle and/or the link class of the road on which the vehicle is currently travelling (step 604). The warning distance is then determined (step 606) using the vehicle speed or the link class depending upon which of the above-described embodiments is employed.

The system then determines whether there is a junction within the warning distance which is similar to the manoeuvre junction (step 608). If such a junction exists, the system determines the distance between the two junctions, i.e., the first distance, (step 610), and whether the first distance is less than a minimum limit (step 612). The minimum limit may be a fixed value, or it may vary according to the current link class. If the first distance is greater than or equal to the minimum limit, the warning distance is set to the first distance (step 614). If, however, the first distance is less than the minimum limit, the warning distance is set to the minimum limit (step 616).

The system then determines the current position of the vehicle (step 618). If no intermediate junction is found in step 608, the system moves directly to step 618. The system then determines whether the current vehicle position is within the warning distance (step 620). If not, the system continues to update the vehicle position until it is. If the current vehicle position is within the warning distance, the system issues a manoeuvre instruction voice prompt to the driver (step 622). If the destination has been reached (step 624) , the procedure ends. If not, the system repeats the procedure with reference to the next manoeuvre.

While particular embodiments illustrative of the invention have been described by way of example, it will be understood that variations and modifications thereof, as well as other embodiments are possible within the scope of the appended claims.

For example, the embodiments have been described primarily with regard to the timing of voice guidance prompts. However, it will be understood that other warning arrangements, for example, the timing of warning chimes may be used.

**Claims**

1. A method of providing route guidance to a user of a vehicle navigation system, including the steps of generating a route which corresponds to a plurality of manoeuvres, determining a warning distance corresponding to a particular manoeuvre associated with a first junction, the first junction having a first geometry, determining whether a second junction having a similar geometry to the first geometry precedes the first junction within the warning distance, where the second junction does not precede the first junction, providing a manoeuvre instruction corresponding to the particular manoeuvre at the warning distance from the first junction, and where the second junction precedes the first junction, providing the manoeuvre instruction at an adjusted warning distance from the first junction.

2. The method as claimed in claim 1, wherein the warning distance has a minimum limit, and the first and second junctions are separated by a first distance, the adjusted warning distance being set to the first distance where the first distance is greater than or equal to the minimum limit, and the adjusted warning distance being set to the minimum limit where the first distance is less than the minimum limit.

3. The method as claimed in claim 1, wherein the first and second providing steps include providing a voice prompt corresponding to the manoeuvre instruction.

4. The method as claimed in claim 1, wherein the first and second junctions are separated by a first distance, the adjusted warning distance determined with reference to the first distance.

5. The method as claimed in claim 1, wherein the warning distance is determined with reference to a variable parameter.

6. The method as claimed in claim 5, wherein the variable parameter includes a vehicle speed.

7. The method as claimed in claim 6, wherein the warning distance has a minimum limit and a maximum limit and is calculated using the equations:

$$d_w = d_{max}' \text{ for } V_a > V_{max}$$

$$d_w = d_{min} + [(d_{max} - d_{min}) \cdot (V_a - V_{min})]/(V_{max} - V_{min}), \text{ for } V_{max} \geq V_a \geq V_{min}$$

$$d_w = d_{min}' \text{ for } V_a < V_{min}$$

where

$d_w$ is the warning distance;
$d_{min}$ is the minimum limit;
$d_{max}$ the maximum limit;
$v_a$ is the vehicle speed;
$v_{min}$ is a minimum speed below which the warning distance is the minimum limit; and
$v_{max}$ is a maximum speed above which the warning distance is the maximum limit.

8. The method as claimed in claim 5, wherein the variable parameter includes a road segment link class.

9. The method as claimed in claim 8, wherein determining the warning distance includes selecting a value associated with a first link class.

10. A vehicle navigation system (100), including a plurality of sensors (112, 114) for detecting a current vehicle position, a vehicle heading, and vehicle motion, and generating signals indicative thereof, a database medium (126) having geographic locations of a plurality of road segments and junctions stored therein, a processor (120) coupled to the sensors (112, 114) and the database medium (126) which is configured to generate a route which corresponds to a plurality of manoeuvres, to determine a warning distance corresponding to a particular manoeuvre associated with a first junction, the first junction having a first geometry, to determine whether a second junction having a similar geometry to the first geometry precedes the first junction within the warning distance, where the second junction does not precede the first junction, to provide a manoeuvre instruction corresponding to the particular manoeuvre at the warning distance from the first junction, and where the second junction precedes the first junction, to provide the manoeuvre instruction at an adjusted warning distance from the first junction, and a user interface (136) coupled to the processor (120) for communicating the manoeuvre instruction to a user of the vehicle navigation system.

11. A computer program product for providing route guidance to a user of a vehicle navigation system, the computer program product including a computer-readable medium, and a computer program mechanism embedded in the computer-readable medium for causing a computer to perform the steps of generating a route which corresponds to a plurality of manoeuvres, determining a warning distance corresponding to a particular manoeuvre associated with a first junction, the first junction having a first geometry, determining whether a second junction having a similar geometry to the first geometry precedes the first junction within the warning distance, where the second junction does not precede the first junction, providing a manoeuvre instruction corresponding to the particular manoeuvre at the warning distance from the first junction, and where the second junction precedes the first junction, providing the manoeuvre instruction at an adjusted warning distance from the first junction.

## Patentansprüche

1. Verfahren zum Bereitstellen von Routenführung für den Benutzer eines Fahrzeugnavigationssystems, umfassend die folgenden Schritte: Erzeugen einer Route, die einer Mehrzahl von Manövern entspricht, Ermitteln einer Wamdistanz, die einem bestimmten Manöver entspricht, das mit einer ersten Anschlussstelle assoziiert ist, wobei die erste Anschlussstelle eine erste Geometrie hat, Ermitteln, ob eine zweite Anschlussstelle mit einer ähnlichen Geometrie wie die erste Geometrie innerhalb der Warndistanz vor der ersten Anschlussstelle liegt, Geben, wenn die zweite Anschlussstelle nicht vor der ersten Anschlussstelle liegt, einer Manöveranweisung, die dem bestimmten Manöver an der Warndistanz von der ersten Anschlussstelle entspricht, und Geben, wenn die zweite Anschlussstelle vor der ersten Anschlussstelle liegt, der Manöveranweisung in einer justierten Wamdistanz von der ersten Anschlussstelle.

2. Verfahren nach Anspruch 1, bei dem die Warndistanz eine Mindestgrenze hat und die erste und die zweite Anschlussstelle durch eine erste Distanz voneinander getrennt sind, wobei die justierte Warndistanz auf die erste Distanz eingestellt wird, wenn die erste Distanz größer als die oder gleich der Mindestgrenze ist, und wobei die justierte Warndistanz auf die Mindestgrenze eingestellt wird, wenn die erste Distanz geringer ist als die Mindestgrenze.

3. Verfahren nach Anspruch 1, bei dem der erste und der zweite Gebeschritt das Geben einer gesprochenen Aufforderung beinhalten, die der Manöveranweisung entspricht.

4. Verfahren nach Anspruch 1, bei dem die erste und die zweite Anschlussstelle durch eine erste Distanz getrennt sind, wobei die justierte Wamdistanz mit Bezug auf die erste Distanz ermittelt wird.

5. Verfahren nach Anspruch 1, bei dem die Warndistanz mit Bezug auf einen veränderlichen Parameter ermittelt wird.

6. Verfahren nach Anspruch 5, bei dem der veränderliche Parameter eine Fahrzeuggeschwindigkeit beinhaltet.

7. Verfahren nach Anspruch 6, bei dem die Warndistanz eine Mindestgrenze und eine Höchstgrenze hat und mit den folgenden Gleichungen berechnet wird:

$$d_w = d_{max}' \text{ für } V_a > V_{max}$$

$$d_w = d_{min} + [(d_{max}-d_{min}) \cdot (V_a-V_{min})] / (V_{max}-V_{min}), \text{ für } V_{max} \geq V_a \geq V_{min}$$

$$d_w = d_{min}' \text{ für } V_a < V_{min}$$

wobei

$d_w$ die Warndistanz ist;

$d_{min}$ die Mindestgrenze ist;

$d_{max}$ die Höchstgrenze ist;

$v_a$ die Fahrzeuggeschwindigkeit ist;

$v_{min}$ eine Mindestgeschwindigkeit ist, unterhalb derer die Warndistanz die Mindestgrenze ist; und

$v_{max}$ eine Höchstgeschwindigkeit ist, oberhalb derer die Warndistanz die Höchstgrenze ist.

8. Verfahren nach Anspruch 5, bei dem der veränderliche Parameter eine Straßensegment-Verbindungsklasse beinhaltet.

9. Verfahren nach Anspruch 8, bei dem das Ermitteln der Warndistanz das Wählen eines Wertes in Verbindung mit einer ersten Verbindungsklasse beinhaltet.

10. Fahrzeugnavigationssystem (100) mit einer Mehrzahl von Sensoren (112, 114) zum Erfassen einer aktuellen Fahrzeugposition, einer Fahrzeugbewegungsrichtung und einer Fahrzeugbewegung, und Erzeugen von dies anzeigenden Signalen, ein Datenbankmedium (126) mit darin gespeicherten geografischen Orten aus einer Mehrzahl von Straßensegmenten und Anschlussstellen, einen Prozessor (120), der mit den Sensoren (112, 114) und dem Datenbankmedium (126) gekoppelt ist, das so konfiguriert ist, dass es eine Route erzeugt, die einer Mehrzahl von Manövern entspricht, um eine Warndistanz zu ermitteln, die einem bestimmten Manöver entspricht, das mit einer ersten Anschlussstelle assoziiert ist, wobei die erste Anschlussstelle eine erste Geometrie hat, um zu ermitteln, ob eine zweite Anschlussstelle mit einer ähnlichen Geometrie wie der ersten Geometrie innerhalb der Warndistanz vor der ersten Anschlussstelle liegt, um, wenn die zweite Anschlussstelle nicht vor der ersten Anschlussstelle liegt, eine Manöveranweisung zu geben, die dem ersten bestimmten Manöver an der Warndistanz von der ersten Anschlussstelle entspricht, und um, wenn die zweite Anschlussstelle vor der ersten Anschlussstelle liegt, die Manöveranweisung in einer justierten Warndistanz von der ersten Anschlussstelle zu geben, und eine Benutzeroberfläche (136), die mit dem Prozessor (120) gekoppelt ist, um die Manöveranweisung einem Benutzer des Fahrzeugnavigationssystems zu übermitteln.

11. Computerprogrammprodukt zum Bereitstellen von Routenführung für den Benutzer eines Fahrzeugnavigationssystems, wobei das Computerprogrammprodukt Folgendes umfasst: ein rechnerlesbares Medium und einen Computerprogrammmechanismus, der in dem rechnerlesbaren Medium eingebettet ist, um einen Computer zu veranlassen, die folgenden Schritte auszuführen: Erzeugen einer Route, die einer Mehrzahl von Manövern entspricht, Ermitteln einer Warndistanz, die einem bestimmten Manöver entspricht, das mit einer ersten Anschlussstelle assoziiert ist, wobei die erste Anschlussstelle eine erste Geometrie hat, Ermitteln, ob eine zweite Anschlussstelle mit einer ähnlichen Geometrie wie die erste Geometrie innerhalb der Warndistanz vor der ersten Anschlussstelle liegt, Geben, wenn die zweite Anschlussstelle nicht vor der ersten Anschlussstelle liegt, einer Manöveranweisung, die dem bestimmten Manöver in der Warndistanz von der ersten Anschlussstelle entspricht, und Geben, wenn die zweite Anschlussstelle vor der ersten Anschlussstelle liegt, der Manöveranweisung in einer justierten Warndistanz von der ersten Anschlussstelle.

## Revendications

1. Méthode fournissant des conseils sur l'itinéraire à suivre à un utilisateur d'un système de navigation de véhicule, qui comprend les opérations suivantes : produire un itinéraire qui correspond à une pluralité de manoeuvres, déterminer une distance d'avertissement correspondant à une manoeuvre particulière associée à une première intersection, cette première intersection ayant une première géométrie, déterminer si une deuxième intersection ayant une géométrie similaire à la première géométrie précède la première intersection à une distance inférieure à la distance d'avertissement, lorsque la deuxième intersection ne précède pas la première intersection, fournir une instruction de manoeuvre correspondant à la manoeuvre particulière à la distance d'avertissement de la première intersection, et lorsque la deuxième intersection précède la première intersection, fournir l'instruction de manoeuvre à une distance d'avertissement modifiée de la première intersection.

2. La méthode selon la revendication 1, dans laquelle la distance d'avertissement a une limite minimum, et la première et la deuxième intersection sont séparées par une première distance, la distance d'avertissement modifiée étant fixée à la première distance lorsque la première distance est supérieure ou égale à la limite minimum, et la distance d'avertissement modifiée étant fixée à la limite minimum lorsque la première distance est inférieure à la distance minimum.

**3.** La méthode selon la revendication 1, dans laquelle la première et la deuxième opération de fourniture d'instruction comprennent la fourniture d'un message vocal correspondant à l'instruction de manoeuvre.

**4.** La méthode selon la revendication 1, dans laquelle la première et la deuxième intersection sont séparées par une première distance, la distance d'avertissement modifiée étant déterminée relativement à la première distance.

**5.** La méthode selon la revendication 1, dans laquelle la distance d'avertissement est déterminée relativement à un paramètre variable.

**6.** La méthode selon la revendication 5, dans laquelle le paramètre variable comprend une vitesse du véhicule.

**7.** La méthode selon la revendication 6, dans laquelle la distance d'avertissement a une limite minimum et une limite maximum et est calculée en utilisant les équations suivantes :

$$d_w = d_{max}\text{' pour } V_a > V_{max}$$

$$d_w = d_{min} + [(d_{max} - d_{min}) \cdot (V_a - V_{min})]/(V_{max} - V_{min}) \text{ pour } V_{max}\ V_a\ V_{min}$$

$$d_w = d_{min}\text{' pour } V_a < V_{min}$$

où

$d_w$ est la distance d'avertissement ;
$d_{min}$ est la limite minimum ;
$d_{max}$ est la limite maximum ;
$V_a$ est la vitesse du véhicule ;
$V_{min}$ est une vitesse minimum en dessous de laquelle la distance d'avertissement est la limite minimum ; et
$V_{max}$ est une vitesse maximum au-dessus de laquelle la distance d'avertissement est la limite maximum ;

**8.** La méthode selon la revendication 5, dans laquelle le paramètre variable comprend une classe de segment de route.

**9.** La méthode selon la revendication 8, dans laquelle la détermination de la distance d'avertissement comprend la sélection d'une valeur associée à une première classe de route.

**10.** Système de navigation de véhicule (100), comprenant une pluralité de capteurs (112, 114) pour détecter la position actuelle d'un véhicule, la direction d'un véhicule et le mouvement d'un véhicule, et pour produire des signaux indicateurs de ces paramètres, un moyen base de données (126) où sont mémorisés des emplacements géographiques d'une pluralité de segments de route et d'intersections, un processeur (120) couplé aux capteurs (112, 114) et au moyen base de données (126) qui est configuré de façon à produire un itinéraire qui correspond à une pluralité de manoeuvres, à déterminer une distance d'avertissement correspondant à une manoeuvre particulière associée à une première intersection, cette première intersection ayant une première géométrie, à déterminer si une deuxième intersection ayant une géométrie similaire à la première géométrie précède la première intersection à une distance inférieure à la distance d'avertissement, lorsque la deuxième intersection ne précède pas la première intersection, à fournir une instruction de manoeuvre correspondant à la manoeuvre particulière à la distance d'avertissement de la première intersection, et lorsque la deuxième intersection précède la première intersection, à fournir l'instruction de manoeuvre à une distance d'avertissement modifiée de la première intersection, et une interface utilisateur (136) couplée au processeur (120) pour communiquer l'instruction de manoeuvre à un utilisateur du système de navigation de véhicule.

**11.** Produit programme d'ordinateur pour fournir des conseils sur l'itinéraire à suivre à un utilisateur d'un système de navigation de véhicule, le produit programme d'ordinateur comprenant un support lisible par ordinateur, et un mécanisme de programme d'ordinateur intégré dans le support lisible par ordinateur pour faire effectuer à un ordinateur les opérations suivantes : produire un itinéraire qui correspond à une pluralité de manoeuvres, déterminer une distance d'avertissement correspondant à une manoeuvre particulière associée à une première intersection, cette première intersection ayant une première géométrie, déterminer si une deuxième intersection ayant une géométrie similaire à la première géométrie précède la première intersection à une distance inférieure à la distance d'avertissement, lorsque la seconde intersection ne précède pas la première intersection, fournir une instruction de manoeuvre correspondant à la manoeuvre particulière à la distance d'avertissement de la première intersection, et lorsque la deuxième intersection précède la première intersection, fournir l'instruction de manoeuvre à une distance d'avertissement modifiée de la première intersection.

FIG. 1

STORAGE MEDIUM 126

RAM 130

128

CPU 124

DATA BUS

OUTPUT CONTROLLER 132

OUTPUT COMMUNICATOR 134

USER INTERFACE 136

140

120

100

SENSOR/GPS INTERFACE 122

ANGULAR VELOCITY SENSOR 114

MILEAGE SENSOR 112

G.P.S. 118

FIG. 2

FIG. 3

FIG. 4

FIG. 5

*FIG. 6*